# EUROPÄISCHE PATENTSCHRIFT

(11) **EP 2 825 339 B1**
(45) Veröffentlichungstag und Bekanntmachung des Hinweises auf die Patenterteilung: **16.08.2023**
(21) Anmeldenummer: 13717158.3
(22) Anmeldetag: 14.03.2013
(51) Int. Cl.: B23B 51/10, B23D 79/02

(54) **VERFAHREN UND ENTGRATWERKZEUG ZUR ENTGRATUNG VON INSBESONDERE UNRUNDEN AUSNEHMUNGEN IN WERKSTÜCKEN**
METHOD AND DEBURRING TOOL FOR DEBURRING IN PARTICULAR NON-ROUND RECESSES IN WORKPIECES
METHODE ET OUTIL D'ÉBARBAGE PERMETTANT D'ÉBARBER DES TROUS QUI NE SONT NOTAMMENT PAS RONDS DANS DES PIÈCES

(30) Priorität: 14.03.2012 DE 102012005246
(43) Veröffentlichungstag der Anmeldung: 21.01.2015
(73) Patentinhaber: Heule Werkzeug AG, 9436 Balgach (CH)
(72) Erfinder: FÄSSLER, Roman, CH-9437 Marbach SG (CH); HEULE, Heinrich, CH-9434 Au SG (CH)
(74) Vertreter: Riebling, Peter
(86) Internationale Anmeldenummer: PCT/EP2013/000763
(87) Internationale Veröffentlichungsnummer: WO 2013/135383

(56) Entgegenhaltungen:
- EP-A1- 1 075 888
- WO-A2-2008/083646
- DE-A1-102007 020 207

## Beschreibung

Die Erfindung betrifft ein Entgratwerkzeug zur Entgratung von beliebig geformten Rändern von Ausnehmungen in Werkstücken, sowie ein Verfahren zum Betrieb eines Entgratwerkzeuges mit einem Messer.

Bisher ist es lediglich bekannt, bei unrunden Ausnehmungen oder ungleichmäßigen Austrittsrändern von Bohrungen den sich bei der Bearbeitung bildenden Grat dadurch zu entfernen, dass mit einer Bürste, einer Feile oder einem Bohrer die dort entstehenden Grate entfernt werden. Besondere Schwierigkeiten ergeben sich zum Beispiel dann, wenn sich kreuzende Bohrungen vorhanden sind, die eine unrunde Schnittausnehmung bilden, die z. B. ei- oder olivenförmig ausgebildet ist.

Bei sich kreuzenden Schmiermittel-Bohrungen z. B. in Kurbelwellen, hat man sich dadurch beholfen, dass in die - sich aus der Verschneidung der Bohrungen ergebende - unrunde Ausnehmung mit einer Reibahle eingefahren wurde, um die dort gebildeten Grate möglichst vollständig zu entfernen. Ebenso ist es bekannt, Bürstenwerkzeuge zu verwenden, um die Grate an den unrunden, sich verschneidenden Bohrungsrändern zu entfernen. Es hat sich jedoch herausgestellt, dass eine solche Gratentfernung schwierig und unsicher ist, denn durch die verwendeten Werkzeuge kann nicht sichergestellt werden, dass der gesamte Bohrungsrand gleichmäßig angefast ist und alle Grate am Bohrungsrand entfernt sind.

Sofern Bürstenwerkzeuge verwendet werden, ist es nicht möglich, die Gratwurzel zu entfernen, weil die Borsten elastisch ausweichen und nicht in der Lage sind, eine zuverlässige und vollständige Bearbeitung des Bohrungsrandes vorzunehmen.

Mit der EP 1 075 888 A1 wird ein Miniatur-Entgratwerkzeug zum Entgraten von Bohrungen mittels eines stiftförmigen Werkzeuges offenbart, in dem ein Entgratmesser radial verschieblich angeordnet ist. Das Werkzeug führt ausschließlich im Rotationsbetrieb eine spanabhebende Bearbeitung durch.

Die DE 10 2007 020 207 A1 offenbart ein Verfahren und Werkzeug zum Entgraten von Stoßkanten an schräg verlaufenden Querbohrungen, wobei ein Entgratwerkzeug mit einem druckmittelgesteuerten Messer eingesetzt wird.

Die WO 2008/083646 A2**,** die die Präambel des Anspruches 1 offenbart, offenbart ein Entgratwerkzeug zum Entgraten von Stoßkanten an orthogonal und schräg verlaufenden Querbohrungen. Das Entgratwerkzeug weißt hierfür ein Messer mit einer vor- und rückwärts arbeitenden Schneide auf und wird unter Einwirkung eines flüssigen Druckmediums aus dem Fenster des Werkzeugschafts herausgedrückt.

Der Erfindung liegt deshalb die Aufgabe zugrunde, ein Entgratwerkzeug zur Entgratung der Ränder beliebig geformter Ausnehmungen, insbesondere von unrunden Ausnehmungen z.B. von sich kreuzender Bohrungskanälen vorzuschlagen, mit dem eine wirksame Bearbeitung des gesamten Randes in Form einer spanabhebenden Bearbeitung erfolgen kann.

Zur Lösung der gestellten Aufgabe ist die Erfindung durch die technische Lehre des Anspruches 1 und des Anspruches 11 gekennzeichnet.

Wesentliches Merkmal der Erfindung ist, dass das Entgratwerkzeug als schrittweise um seine Längsachse drehend und in Richtung seiner Längsachse oszillierend verschiebbar angetriebenes Stoß- und Ziehwerkzeug ausgebildet ist, das mit mindestens einem quer zur Längsachse des Entgratwerkzeugs unter Federlast verschiebbaren oder verschwenkbaren Messer ausgerüstet ist, das eine spanabhebende Bearbeitung des Randes der unrunden Ausnehmung ausführt.

Bisher war es lediglich bekannt, annähernd runde Ausnehmungen in Werkstücken durch drehend angetriebene Entgratwerkzeuge spanabhebend zu bearbeiten.

Es ist zwar mit einer auf den gleichen Anmelder zurückgehenden älteren Patentanmeldung auch bekannt, ein sog. "Wobbel"-Werkzeug zu verwenden, mit dem eine Abtastung des Bohrungsrandes stattfand und in Abhängigkeit von der Abtastung eine zwangsgesteuerte Vorschubbewegung der Entgratmesser im drehenden Betrieb stattfand.

Es hat sich jedoch herausgestellt, dass der damit verbundene Aufwand für die Zwangssteuerung der Entgratmesser und für die Abtastung des Bohrungsrandes unverhältnismäßig hoch ist und eine ausreichende Entgratungswirkung nicht gewährleistet ist.

Besondere Schwierigkeiten entstehen dann, wenn es um die Entgratung von im Winkel sich schneidenden Bohrungskanälen geht, die sich z. B. im Winkel von 120, 150 oder 170 Grad schneiden. Die sich dort bildenden Verschneidungen bilden unrunde Ausnehmungen, die mit drehenden Bearbeitungswerkzeugen nicht mehr vollständig und sauber entgratet werden können.

Hier setzt die Erfindung ein, die statt eines drehenden Bearbeitungswerkzeuges ein im Stoß- oder Ziehbetrieb arbeitendes Entgratwerkzeug vorschlägt, was bedeutet, dass nach einer ersten Ausführungsform die (spanabhebende) Entgrataktion des erfindungsgemäßen Werkzeuges im Vorwärtshub, das heißt also in Richtung der Längsachse des Grundkörpers des Entgratwerkzeuges, beim Eintauchen in die Bohrung oder in die sonstige Ausnehmung des Werkstücks stattfindet.

In einer anderen Ausgestaltung kann es vorgesehen sein, dass das mindestens eine erfindungsgemäße Messer des Entgratwerkzeugs zur Entgratung des unrunden Randes der Ausnehmung im Rückwärtsbetrieb, das heißt also im Ziehbetrieb, die Entgratung vornimmt.

In einer dritten Ausgestaltung ist vorgesehen, dass (mindestens) ein doppelt wirkendes Messer im Entgratwerkzeug angeordnet ist, welches in der Lage ist, sowohl im Stoß- als auch im Ziehbetrieb eine Entgratung durchzuführen.

Eine solche Entgratung im Stoß- und Ziehbetrieb nach der dritten Ausführungsform ist vor allem dann zweckmäßig, wenn sich die schneidenden Bohrungen fluchtend jenseits der Schnittstelle unter Bildung der unrunden Ausnehmung fortsetzen, sodass das Entgratwerkzeug sowohl beim Hineinfahren in die eine Bohrung den einen Bohrungsrand im Stoßbetrieb entgratet und bei weiterem Vorschub auch den anderen, fluchtend gegenüberliegenden Rand der Ausnehmung entgratet.

Der einfacheren Beschreibung wegen wird in der folgenden Beschreibung davon ausgegangen, dass eine Entgratung von unrunden Bohrungsrändern erfolgen soll. Hierauf ist die Erfindung jedoch nicht beschränkt. Das erfindungsgemäße Werkzeug, das hierfür angewendete Verfahren, sowie das mit einem eigenen Erfindungsgegenstand beanspruchte Entgratmesser kann für die Entgratung von beliebig geformten Rändern von beliebig geformten Ausnehmungen - demnach auch für runde Ausnehmungen - verwendet werden.

Es sind also nicht nur Ausnehmungen von Bohrungsrändern und von sich schneidenden Bohrungen in Werkstücken beliebiger Art gemeint, sondern beliebige Ausnehmungen, die z. B. halbrund sein können, oval, geteilt oder langlochförmig und die z. B. auch nur halbiert sind, das heißt, sie haben nur auf einer Seite das Material, welches zu entgraten ist, während die andere Seite vollkommen fehlt und eine Entgrataktion wegen fehlenden Werkstoffes an dieser Seite entfallen kann.

Natürlich können auch beliebige Mehrkantbohrungen entgratet werden, sodass nur der einfacheren Beschreibung wegen in der folgenden Beschreibung von der Entgratung eines unrunden Bohrungsrandes ausgegangen wird, obwohl die Erfindung hierauf nicht beschränkt ist.

Das erfindungsgemäße Entgratwerkzeug verzichtet demnach auf eine Abtastung des Randes der Ausnehmung und auf eine davon abgeleitete Zwangsführung des einen oder der mehreren Messer, wie es im Stand der Technik bekannt ist. Stattdessen geht die Erfindung davon aus, dass ein geeignetes maschinell gesteuertes Führungswerkzeug vorhanden ist, in dessen Spannbacken oder - allgemeiner - in dessen Befestigungsvorrichtung - der Grundkörper des Entgratwerkzeugs eingespannt ist und in X- und Y- Richtung eine Führung des Entgratwerkzeugs entlang des in der X- und Y-Ebene aufgespannten Randes der (z.B. unrunden) Ausnehmung ausführt. Dabei wird davon ausgegangen, dass das Werkstück ortsfest eingespannt ist.

Es ist auch die kinematische Umkehrung möglich, dass das Entgratwerkzeug ortsfest eingespannt ist und das zu entgratende Werkstück in einer X- und Y-Ebene entlang des in dieser Ebene liegenden Ausnehmungsrandes geführt ist.

In beiden Fällen führt das Entgratwerkzeug (oder kinematisch umgekehrt: das Werkstück) eine in der Z-Achse gerichtete, parallel zur Längsachse des Entgratwerkzeugs geführte oszillierende Verschiebebewegung aus. Damit wird eine Stoß- oder Ziehaktion des einen oder der mehreren Messer auf den Rand der Ausnehmung ausgeübt.

In beiden Fällen führt das Entgratwerkzeug (oder kinematisch umkehrt das Werkstück) eine um die Längsachse des Grundkörpers gerichtete (etwa einer Umfangslinie am Grundkörper folgend) in Indexschritten aufgeteilte Drehbewegung aus. Damit wird erreicht, dass das vorher im spanenden Eingriff an einer bestimmten Position des Randes der Ausnehmung befindliche Messer zu der Nachbarposition am Rand der Ausnehmung für den nächsten spanenden Eingriff (um einen Indexdrehschritt) weiter gedreht wird und/oder verschoben wird.

Eine Verschiebung des Entgratwerkzeuges findet dann statt, wenn statt einer rundzylindrischen Bohrung eine langlochförmige Bohrung entgratet werden soll. In diesem Fall wird ein schrittweise um seine Längsachse drehend angetriebenes Entgratwerkzeug gefordert, welches eine zusätzliche Verschiebebewegung rechtwinklig zur oszillierenden Verschiebeachse ausführt.

Die Erfindung ist nicht darauf beschränkt, dass lediglich ein einziges Messer im Grundkörper des Entgratwerkzeuges angeordnet ist. In einer anderen Ausführung ist vorgesehen, dass mehr als ein Messer vorgesehen ist. Es ist z. B. möglich, zwei bezüglich des Umfangs des Werkzeuges einander gegenüberliegende Messer zu verwenden oder auch gleichmäßig am Umfang verteilt drei oder mehrere Messer, die nicht nur auf einer einzigen Umfangsebene liegen. Sie können auch auf verschiedenen, hintereinander angeordneten Umfangslinien liegen.

Lediglich der einfacheren Beschreibung wegen wird in der folgenden Beschreibung von einem einzigen federnd, im Grundkörper radial verschiebbaren Messer ausgegangen, obwohl die Erfindung hierauf nicht beschränkt ist.

Im Hinblick auf die verwendeten Federmittel für die radiale Federung des Messers können beliebige Federmittel verwendet werden, wie z. B. eine Schraubendruckfeder, eine Schenkeldruckfeder, eine Spiralfeder, ein Elastomerspeicher, eine Blattfeder und beliebige andere Kraftspeicher, die in der Lage sind, eine radiale Verschiebung oder Verschwenkung des einen oder der mehreren Messer aus dem Messerfenster des Grundkörpers des Entgratwerkzeuges zu bewerkstelligen.

Die Erfindung ist nicht nur auf eine radiale Verschiebung des einen oder der mehreren Messer aus dem Messerfenster des Grundkörpers beschränkt. In einer anderen Ausführung können auch Schwenkbewegungen für ein oder mehrere Messer vorgesehen werden, die deshalb aus dem Messerfenster nicht radial heraus- oder herein geschoben werden, sondern in Richtung über eine grundkörperseitige Schwenkachse in den Messerkörper hinein oder aus dem Messerkörper heraus verschwenkt werden.

Auch hier werden die vorgenannten Kraftspeicher angewendet und es sind sämtliche Kraftspeicher möglich, die es ermöglichen, eine derartige federbelastete Schwenkbewegung aus dem Messerkörper heraus und gegen die Kraft des Kraftspeichers in den Messerkörper hinein zu bewerkstelligen.

Aus diesem Grund wird allgemein beansprucht, dass das eine oder mehrere Entgratmesser in Richtung einer Querverschiebung zur Längsachse des Grundkörpers federbelastet in Richtung nach außen vorgespannt sind/ist.

Der einfacheren Beschreibung wegen wird in der folgenden Beschreibung nur davon ausgegangen, dass das Entgratwerkzeug im Ziehbetrieb arbeitet, obwohl - wie oben dargestellt - das Entgratwerkzeug auch im Stoß- und/oder Ziehbetrieb arbeiten kann.

Der einfacheren Beschreibung wegen wird nachfolgend ein solcher Ziehbetrieb beschrieben.
**1.** Im ersten Verfahrensschritt taucht das Entgratwerkzeug mit dem aus dem Grundkörper unter Federlast ausgefahrenen Messer in die Bohrung oder Ausnehmung ein, deren Rand entgratet werden soll.
**2.** Das Entgratwerkzeug stößt auf die vorschubseitige Bohrungsinnenfläche (allgemeiner: auf den Innenumfang des Vorschubkanals), an der das Messer in den Grundkörper federbelastet hinein verdrängt wird und in dieser neutralen Stellung zusammen mit dem Grundkörper durch die Bohrung hindurch fährt.
**3.** Beim Austritt aus der Bohrung oder der beliebig geformten Ausnehmung fährt oder schwenkt das Messer federbelastet nach außen über den Außenumfang des Grundkörpers des Entgratwerkzeugs hinaus und gelangt über den Rand der unrunden, zu entgratenden Ausnehmung hinaus.
**4.** Das Entgratwerkzeug wird danach in Ziehrichtung rückwärts im Vergleich zu der vorherigen Vorschubbewegung nach hinten bewegt.
**5.** Die nach hinten gerichtete Bewegung erfolgt vorzugsweise in einem einzigen Zug, wobei zu Beginn des Entgratvorganges das Messer mit seiner Schneidkante zunächst in das Werkstückmaterial am Bohrungsrand "hinein beisst".
**6.** Mit der weiter fortschreitenden Rückzugsbewegung wird das Messer - unter der Einwirkung später zu beschreibender Steuerflächen am Messer- gegen die Last der Feder oder des Kraftspeichers in den Innenraum des Grundkörpers verdrängt und führt beim Zurückweichen in den Grundkörper des Entgratwerkzeugs die weitere spanabhebende Bewegung zur Entgratung des Ausnehmungsrandes durch, wodurch dadurch der durch die Messerschneidkante abgetrennte Span aus dem Rand der Ausnehmung von der Spanleitstufe des Messers abgehoben und abgeführt wird.
**7.** Nach der vollständigen Abtrennung des Spans vom Rand der Ausnehmung ist das Messer entgegen der Last des dort angeordneten Kraftspeichers vollkommen in den Grundkörper in eine neutrale, nicht-schneidende Position eingefahren, und der gesamte Grundkörper wird damit in Ziehrichtung in die Bohrung eingefahren.
**8.** Als nächstes erfolgt die um den Indexierwinkel erfolgende Drehung des Entgratwerkzeugs um seine Längsachse. Es ist dabei nicht notwendig, dass zu diesem Zweck das Entgratwerkzeug während des Rückwärtshubes vollständig aus der Bohrung heraus gefahren wird.

Es kann auch während der neutralen, nicht-schneidenden Position des einen oder der mehreren Messer in der Bohrung um einen bestimmten Indexwinkel von z. B. 0,5 bis 2 Grad Drehwinkel um seinen Umfang herum gedreht und dann wieder in Stoßrichtung in die Bohrung hinein fahren.

Es wiederholt sich dann der gleiche Vorgang wie ab Ziffer 2 und 3 beschrieben. Weil das Entgratwerkzeug um den Indexwinkel in Umfangsrichtung gedreht wurde, wird der dem ersten Span benachbarte zweite Span vom Ausnehmungsrand abgeschnitten.

Die Indexbewegungen der Verdrehung des Grundkörpers in Richtung seiner Umfangslinie sind so gestaltet, dass sich jeweils (bezüglich des zu entgratenden Randes der Ausnehmung) benachbarte, abgetrennte Späne gegenseitig überlappen. Dadurch wird der Bohrungsrand vollkommen frei von irgendwelchen Zacken oder Einschnitten und wird damit vollkommen glatt und stetig entgratet.

Es wurde oben stehend bereits darauf hingewiesen, dass lediglich der Einfachheit halber ein solches Entgratwerkzeug im Einsatz als Ziehwerkzeug beschrieben wurde, und es wurde nicht dargestellt, dass bei Durchgangsbohrungen das vorher beschriebene Ziehwerkzeug so durch die Durchgangsbohrung hindurchgefahren werden kann, dass es auch auf der fluchtend gegenüberliegenden Bohrungsseite den sich dort bildenden unrunden Ausnehmungsrand entgraten kann. In diesem Fall arbeitet das Messer sowohl im Zieh- als auch im Stoßbetrieb.

Die Erfindung ist nicht auf einen starren Grundkörper des Entgratwerkzeugs, der insbesondere zylindrisch ausgebildet ist, beschränkt. In einer anderen Ausgestaltung kann es vorgesehen sein, dass der Grundkörper als Blattfeder ausgebildet ist, an deren vorderen, freien und schwenkbaren Ende mindestens das eine Messer angeordnet ist.

Selbstverständlich können dort auch mehrere Messer angeordnet sein, und es können auch mehrere getrennt voneinander federnde Blattfedern verwendet werden, wobei jede Blattfeder an ihrem vorderen freien Ende ein geeignetes Messer trägt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schnitt durch zwei sich kreuzende Bohrungen mit einem sich daraus ergebenden verschnittenen Bohrungsrand, der entgratet werden soll.
Figur 2: Die Draufsicht auf den sich ergebenden verschnittenen Bohrungsrand.
Figur 3: Schnitt durch eine erste Ausführungsform eines Entgratwerkzeuges nach der Erfindung.
Figur 4: Die Detailansicht der Vorderseite des Entgratwerkzeuges nach Figur 3.
Figur 5: Eine perspektivische Darstellung des vorderen Endes des Entgratwerkzeuges nach Figur 3 und 4.
Figur 6: Die perspektivische Darstellung einer ersten Ausführungsform eines Messers, welches im Ziehbetrieb arbeitet.
Figur 7: Eine zweite Ausführungsform eines Messers, welches im Zieh- und Stoßbetrieb arbeitet.
Figur 8: Der erste Arbeitsschritt für ein Entgratmesser im Ziehbetrieb, wenn es noch nicht in die Bohrung eingefahren ist.
Figur 9: Der sich an Figur 8 anschließende Verfahrensschritt, wenn das Messer im Ziehbetrieb die erste Entgratung vornimmt.
Figur 10: Eine Detaildarstellung der Figur 9 mit Darstellung des ersten Anbeißens des Messers am Bohrungsrand.
Figur 11: Die Fortsetzung der Darstellung nach Figur 10, wenn das Messer federbelastet in den Grundkörper einfährt und gleichzeitige spanabhebende Bearbeitung des Bohrungsrandes vornimmt.
Figur 12: Der fortschreitende Arbeitsvorgang nach Figur 11, wenn das Messer federbelastet in den Grundkörper eingefahren ist und in der Bohrung neutral ruht.
Figur 13-18: Zeitlich fortschreitende Darstellung beim Entgraten eines unrunden Bohrungsrandes mit dem erfindungsgemäßen Ziehwerkzeug.
Figur 19: Perspektivische Darstellung der sich schneidenden Bohrungskanäle in einer ähnlichen Darstellung wie Figur 1.
Figur 20: Schnitt durch eine andere Ausführungsform eines Entgratwerkzeuges mit zwei entgegengerichteten Messern.
Figur 21: Die Darstellung eines Messers (außerhalb des Schutzumfangs des Anspruchs) ohne Steuerfläche im Vergleich zu Figur 6 oder 7.
Figur 22: Eine weitere Ausführungsform für ein Entgratwerkzeug, welches lediglich mit einer oder mehreren Blattfedern arbeitet.

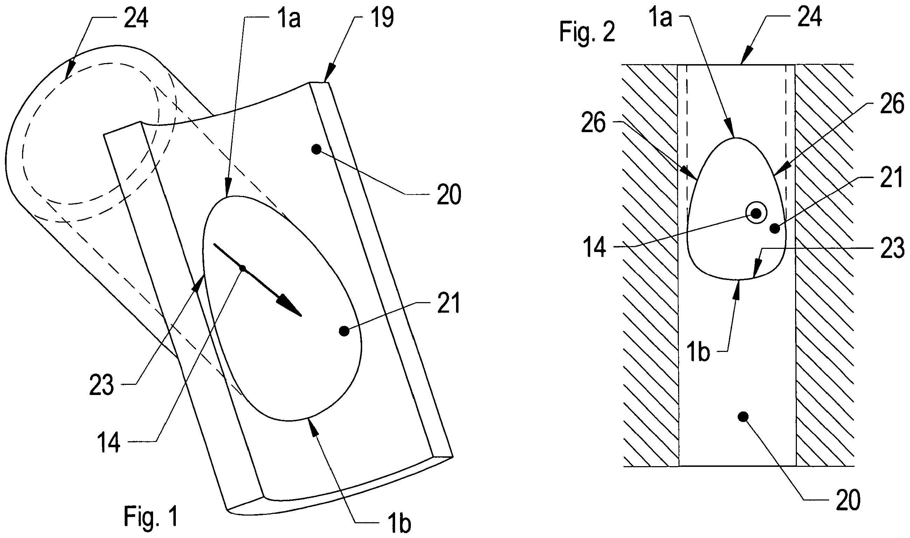

In Figur 1 und 2 ist dargestellt, dass zwei im Winkel von z. B. 45 Grad schneidende Bohrungen, nämlich die Längsbohrung 20 und die Querbohrung 21, im Schnittbereich eine Verschneidung ergeben, deren zu entgratender Rand gemäß Figur 2 etwa oliven- oder tropfenförmig ist.

Es sollen die im Bereich dieser Ausnehmung ergebenden Bohrungskanten 1 über deren vollständigen Umfang entgratet werden.

Demzufolge werden sowohl die obere Bohrungskante 1a als auch die untere Bohrungskante 1b vollständig und ununterbrochen spanabhebend bearbeitet.

Diese beiden Bohrungen 20, 21 sind in einem Werkstück 19 angeordnet, wobei die Art und Materialwahl des Werkstücks 19 für die Erfindung keine Rolle spielt. Bei dem Werkstück 19 kann es sich um ein Metallmaterial, aber auch um ein Kunststoffmaterial oder Holzmaterial oder um einen beliebigen Verbundwerkstoff handeln.

Im Bereich der Querbohrung 21 ergeben sich ein Bohrungseintritt 24 und ein Bohrungsaustritt 23. Der Bohrungsaustritt 23 definiert die obere und untere Bohrungskante 1a, 1b.

Das erfindungsgemäße Stoß- oder Ziehwerkzeug taucht aus der Querbohrung 21 in Pfeilrichtung 14 in der Papierebene nach Figur 2 nach oben heraus und fährt dann in der später zu beschreibenden Art das eine oder mehrere Messer federbelastet aus.

Die Seitenflächen vom Bohrungsaustritt 23 und Bohrungseintritt 24 sind durch die seitlichen Bohrungsaustrittskanten 26 definiert.

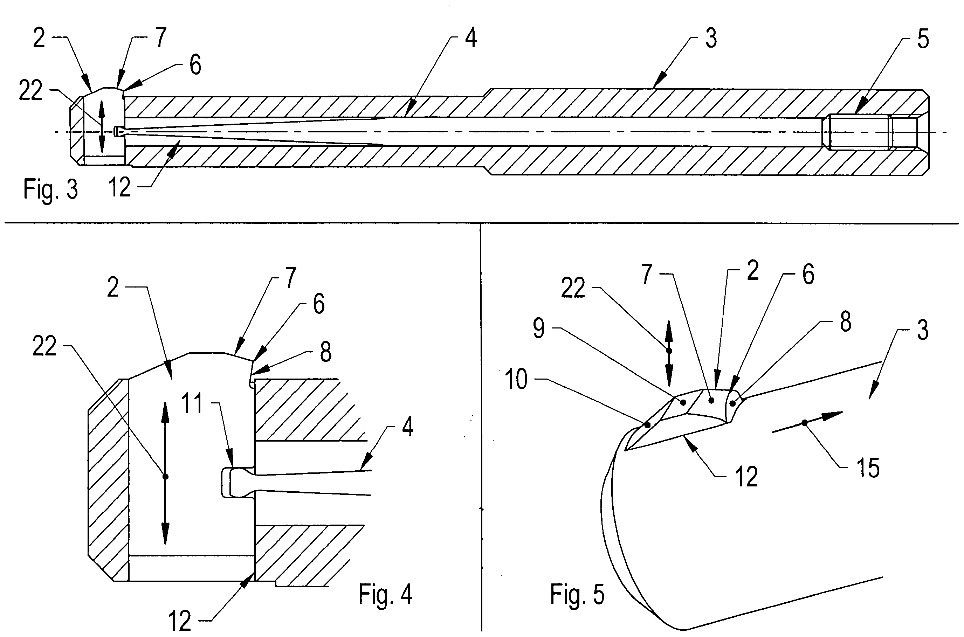

Die Figur 3 zeigt eine erste Ausführungsform des erfindungsgemäßen Stoß- oder Ziehwerkzeuges, welches auch allgemein als Entgratwerkzeug bezeichnet wird. Es besteht aus einem etwa zylindrischen Grundkörper 3, dessen vorderes Ende im Durchmesser vermindert sein kann.

In der Längsbohrung im Innenraum des Grundkörpers 3 ist das eine Ende einer Feder 4 mit einer Spannschraube 5 befestigt ist. Die Feder 4 ist als einseitig eingespannte Biegefeder ausgebildet.

Sie wirkt also als Blattfeder. Sie kann auch als einseitig eingespannter Rundstab, oder auch mit exzentrischem Querschnitt ausgeformt sein. Die Spannschraube 5 verhindert, dass die Feder 4 nach hinten aus der Längsbohrung im Grundkörper herausfällt.

Es können durch nicht näher dargestellte Einstellmittel die Federkraft der Feder 4 eingestellt werden.

Gemäß Figur 4 greift das vordere, freie und federnde Ende der Feder 4 in eine Messernut 11 am Grund des Messers 2 ein und ist dort verschwenkbar gelagert.

Die Figur 4 zeigt die Grund- oder Arbeitsstellung des Entgratwerkzeuges, bei der das Messer 2 mit seiner rückseitig angeordneten Schneidkante 6 aus dem Messerfenster 12 des Grundkörpers 3 heraus gefahren ist. Die Schneidkante 6 geht in eine noch später zu beschreibende, zur Schneidkante abgewinkelte Spanfläche 8 über und jenseits der Schneidkante 6 ist (wiederum in einem bestimmten Winkel hierzu) eine Steuerfläche 7 zur Steuerung der Verschiebung des Messers 2 vorgesehen.

Die weiteren Einzelheiten ergeben sich aus Figur 5. Dort ist erkennbar, dass die Schneidkante 6 etwa bogenförmig ausgebildet ist und die einzige schneidende Kante des Messers ist die Schneidkante 6, die dann in der rückwärts gerichteten Arbeitsrichtung 15 (Ziehrichtung) in eine sich daran anschließende konkave Spanfläche 8 übergeht.

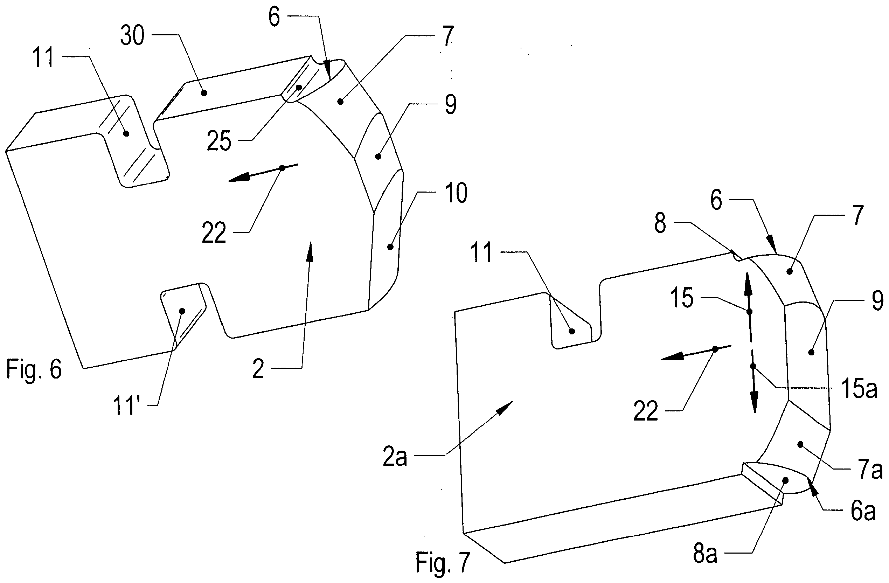

Die Figur 6 zeigt, wie die konkave Spanfläche 8 über eine Spannut 25 in eine neutrale Fläche 30 übergeht.

Selbstverständlich ist die Erfindung nicht auf eine konkave, bogenförmige Ausbildung der Spanfläche 8 beschränkt. Die Spanfläche 8 dient nur zur Spanabhebung des abgeschnittenen Spans und zur Fortführung in die Umgebung des Grundkörpers 3. Statt einer konkaven Spannut 25 können auch gerade ausgebildete, das heißt also angeschrägte, aber gerade gerichtete Spannuten 25 vorgesehen werden.

Jenseits der Spanfläche 8 und über die Schneidkante 6 hinaus schließt sich an die Schneidkante 6 eine Steuerfläche 7 an, deren Funktion noch später beschrieben wird. An diese Steuerfläche 7 schließt sich eine Gleitfläche 9 an, die in eine Einführfläche 10 übergeht, die als Einführschräge für das Messer 2 bei seiner Einführung in die Bohrung genutzt wird.

Die Arbeitsrichtung (Ziehrichtung) ist mit Pfeilrichtung 15 in Figur 5 eingezeichnet, und es ist erkennbar, dass das Messer 2 federbelastet unter der Wirkung der Feder 4 aus dem Messerfenster 12 herausragt, wie es in Figur 5 dargestellt ist. Dies ist die Arbeitsstellung des Messers, bei der die Schneidkante 6 in Eingriff mit dem zu bearbeitenden Ausnehmungsrand gerät.

Die Figur 6 zeigt weitere Einzelheiten des in Figur 4 und 5 dargestellten Messers 2, welches nur für den Ziehbetrieb geeignet ist. Dort ist erkennbar, dass für den Eingriff des vorderen Endes der Feder 4 eine vertieft im Messer eingebrachte Messernut 11 vorgesehen ist.

Die radiale Verschiebebewegung unter der Last des vorderen Endes der Feder 4 erfolgt in der eingezeichneten Pfeilrichtung 22 nach außen oder entgegen der Kraft dieser Feder 4 nach innen in das Messerfenster 12 hinein.

Die Figur 7 zeigt ein beidseitig schneidendes Messer 2a, bei dem symmetrisch bezüglich die vorderen mittigen Stirnseite spiegelsymmetrisch aneinander gegenüberliegende Schneidkanten 6, 6a angeordnet sind und jede Schneidkante 6, 6a über eine zugeordnete Steuerfläche 7, 7a in eine mittige gemeinsame Gleitfläche 9 übergeht.

In der vorher beschriebenen Weise ist auch der Schneidkante 6a eine Spanfläche 8a zugeordnet.

Im Unterschied zu dem Messer 2 nach Figur 6, welches nur für den Ziehbetrieb geeignet ist, ist das Messer 2a nach Figur 7 sowohl für den Zieh- als auch für den Stoßbetrieb geeignet und arbeitet in beiden Richtungen spanabhebend.

In Figur 6 ist außerdem noch dargestellt, dass das für den Ziehbetrieb bestimmte Messer 2 auch um 180 Grad wendbar ist und in einer 180 Grad gewendeten Stellung in das Messerfenster 12 des Entgratwerkzeuges eingesetzt werden kann, sodass es dann nicht für den Ziehbetrieb, sondern für den Stoßbetrieb geeignet ist. Für diesen Fall ist die in Figur 6 dargestellte Messernut 11' vorgesehen, sodass durch wahlweises Eingreifen des vorderen Endes der Feder 4 in die Messernut 11 oder 11' das Messer entweder in der in Figur 6 dargestellten Arbeitsstellung oder in einer um 180 Grad gewendeten Stellung im Vergleich zu Figur 6 im Stoßbetrieb verwendet werden kann.

Das Messer nach Figur 7 ist ebenfalls für den Stoß- und Ziehbetrieb ausgebildet und kann selbstverständlich auch bei Anbringung einer zugeordneten Messernut 11- um 180 Grad gewendet werden.

Das in Figur 7 dargestellte doppelseitige Messer 2a kann somit auch in den Bearbeitungsrichtungen (Pfeilrichtung 15 und 15a) gegenläufig betrieben werden.

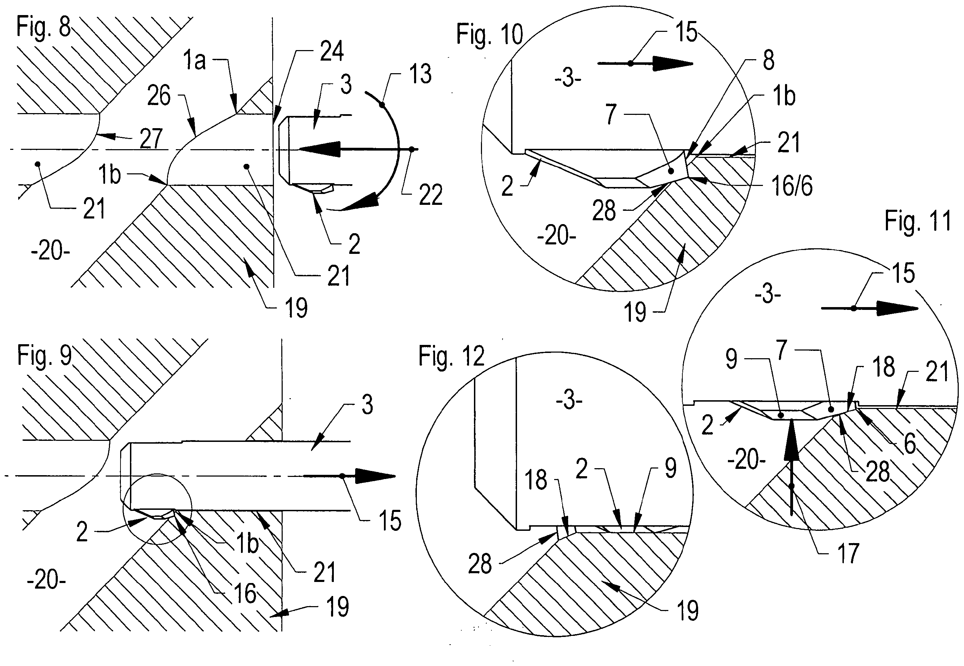

Die Figuren 8 und 9 zeigen die Anwendung des Messers nach Figur 4, 5 und 6 im Ziehbetrieb, wobei gemäß Figur 8 zunächst der Grundkörper 3 in Pfeilrichtung 22 in die Querbohrung 21 eingefahren wird und damit den Bohrungseintritt 24 überwindet. Beim Eintritt in den Bohrungseintritt 24 wird das Messer 2 aufgrund der auf dem Messer 2 lastenden Federlast in den Grundkörper 3 hinein verdrängt und liegt dann im Grundkörper in einer neutralen Stellung an, sodass das Messer in dieser Stellung neutral durch die Querbohrung 21 hindurchgefahren werden kann, bis es die Stellung nach Figur 9 erreicht.

Dort wird das Messer unter der Last der Feder oder eines anderen Kraftspeichers radial aus dem Grundkörper 3 herausgefahren oder geschwenkt und fängt die Entgrataktion an, wie dies anhand der Figuren 10 bis 12 näher erläutert wird.

In einem ersten Verfahrensschritt wird der Grundkörper in Pfeilrichtung 15 gemäß Figur 10 zurückgezogen, sodass die vordere Schneidkante 6 des Messers einen ersten Span- oder Materialeingriff in Form der Materialschnitts 28 mit dem Ausnehmungsrand erhält. Die Schneidkante 6 dringt also nur in Form des Materialschnitts 28 in das Material des Werkstücks 19 ein, und aufgrund der Schrägstellung der Steuerfläche 7 in Bezug zur Zugrichtung 15 kommt damit eine in radialer Richtung wirkende Kraftkomponente auf das Messer und wirkt gegen die Feder, welche das Messer unter der Federlast in ausgeschobener Position hält. In dieser Stellung wird die Federlast der Feder zumindest teilweise überwunden und das Messer fängt an, sich in radialer Richtung in das Messerfenster 12 des Grundkörpers 3 gemäß Figur 11 zurückzubewegen, wobei gleichzeitig die Fortsetzung der Schneidaktion stattfindet, wie dies in Figur 11 dargestellt ist.

Dies bedeutet, dass während des Ziehens des Messers 2 in Pfeilrichtung 15 gleichzeitig eine senkrecht hierzu gerichtete Schwenk- oder Verschiebebewegung des Messers 2 in das Messerfenster 12 des Grundkörpers 3 erfolgt, und während dieser Zeit findet die Material abhebende Bearbeitung in Form des in Figur 11 dargestellten Materialschnittes 28 statt.

Wichtig hierbei ist, dass die Steuerfläche 7 nicht-schneidend ist und sich an die Schneidkante 6 anschließt und schräg auf den Materialschnitt 28 aufsetzt, sodass durch die schräg zur Zugrichtung geneigt ausgebildete Steuerfläche 7 eine in Richtung zur Längsachse der Ziehbewegung (in Pfeilrichtung 15 erfolgende senkrechte) Verdrängungsbewegung des Messers 2 in dem Grundkörper 3 erfolgt und das Messer dabei schneidet.

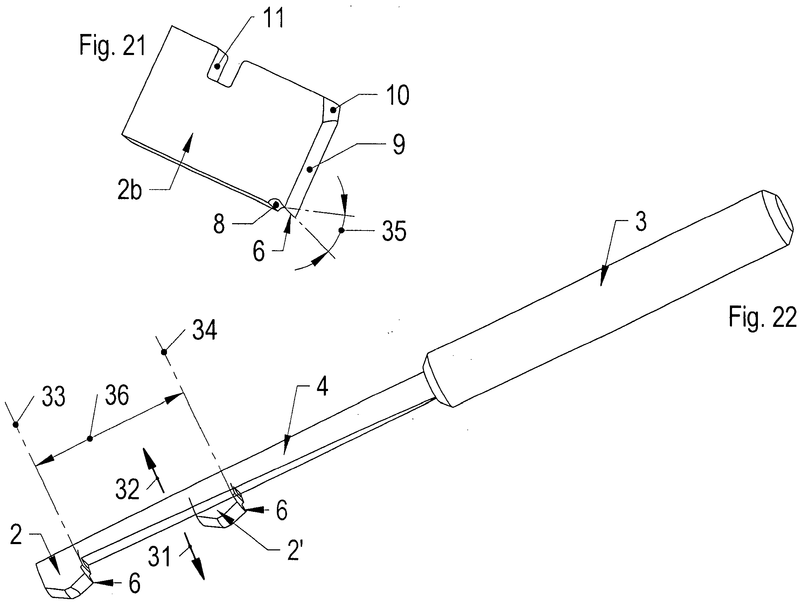

Es ist nicht unbedingt erforderlich, dass die Steuerfläche 7 vorhanden ist. Bei Entfall der Steuerfläche würde ebenfalls ein Schnitt stattfinden, unter der Voraussetzung, dass die Schneidkante 6 schräg zur Zugrichtung 15 angeordnet ist. Das heißt, die Steuerfläche 7 kann auch entfallen, wie es anhand der späteren Figur 21 gezeigt wird, wobei jedoch bei Vorhandensein einer Steuerfläche 7 eine zuverlässigere Verdrängung des Messers 2 in den Grundkörper 3 durch das Messerfenster 12 erfolgt.

Eine zuverlässige Verdrängung erfolgt auch bereits schon durch eine schräge Ausrichtung der Spanfläche 8 bezüglich der Schneidkante 6, wobei die Spanfläche selbst nicht schneidet, aber für eine bestimmte Verdrängungsbewegung des Messers 2 in Richtung senkrecht zur Zugbewegung in Pfeilrichtung 15 sorgt.

Bei einer exakt gerade ausgebildeten Spanfläche und einer exakt gerade ausgebildeten Schneidkante würde das Messer eine gerade gerichtete und parallel zur Zugrichtung erfolgende, spanabhebende Bewegung durchführen und den gesamten Innenumfang der Querbohrung 21 verletzen. Die so bewirkte Spanabhebung ist in unerwünschter Weise gerade ausgebildet und gerade nicht schräg, wie es bei einer Entgratung angestrebt wird.

Dies wird mit der Erfindung vermieden, und deshalb ist das erfindungsgemäße Werkzeug ein Entgratwerkzeug und kein Zieh- oder Räumwerkzeug, welches gerade Materialschnitte durchführt und keine angeschrägten Materialschnitte, die nur den Bohrungsrand betreffen.

Es wird also die beim bekannten Räumen erfolgende Spanabhebung vermieden. Ein solches Räumen erfolgt mit bekannten Räumnadeln, die gerade Materialschnitte ausführen. Das vorliegende Werkzeug arbeitet jedoch als Entgratwerkzeug bei dem eine in Umfangsrichtung fortschreitende stückweise stattfindende Entgratung des Bohrungsrandes erfolgt.

Im Anschluss an die Entgratung des Ausnehmungsrandes nach Figur 11 fährt das Messer entgegen der Kraft der Feder 4 in den Grundkörper 3 hinein und gelangt am Innenumfang der Querbohrung 21 in eine neutrale Position, in der nicht mehr geschnitten wird.

Nach Figur 12 findet in dieser neutralen Position die um die Längsachse des Grundkörpers 3 drehende Indexierbewegung statt. Diese Indexierbewegung kann aber auch in beliebigen anderen Stellungen stattfinden, nämlich immer dort, wo das Messer sich nicht im Schneideingriff mit dem Bohrungsrand befindet.

In einer anderen Ausgestaltung kann es sogar vorgesehen sein, dass während des Schneidens nach Figur 10, das heißt, bei der spanabhebenden Bearbeitung des Ausnehmungsrandes auch das Messer 2 indexiert gedreht wird, sodass in diesem Fall ein schräger spanabhebender Schnitt am Bohrungsrand stattfindet.

Es wird darauf hingewiesen, dass die Indexierbewegung nicht nur in einer Stellung nach Figur 2 stattfinden kann, sondern auch in einer Stellung nach Figur 9 oder in einer Stellung nach Figur 8.

In Figur 10 ist noch dargestellt, dass das Messer 2 mit seiner Schneidkante 6 zunächst im Materialschnitt 28 des Werkstücks 19 einen Kontaktpunkt 16 vorfindet, wo sich die Schneidkante 6 im Material des Werkstückes festbeißt und dann in Form eines Entgratschnittes oder einer Entgratung 18 weiter fortschreitet. Dies ist im Übergang von Figur 10 zur Figur 11 dargestellt.

Die etwa bogenförmig stetig und/oder segmentiert ausgebildete Schneidkante wirkt in Längsrichtung und weist eine anschließende Steuerfläche auf, welche die Entgratbewegung in radialer Richtung nach innen in Richtung auf die Mittelachse der Ausnehmung lenkt und in Längsrichtung begrenzt.

Figur 8 zeigt im Übrigen, dass auch Durchgangsbohrungen entgratet werden können, denn dort ist erkennbar, dass nach der Entgratung der Bohrungsaustrittskante 26 auch die gegenüberliegende Bohrung der Querbohrung 21 mit der Bohrungseintrittskante 27 im Stoßbetrieb entgratet werden kann. Hierfür ist das Messer 2a nach Figur 7 vorgesehen.

Die Figur 11 zeigt in Pfeilrichtung 17 die entgegen der Federkraft der Feder 4 erfolgende Verdrängungsbewegung des Messers 2 in das Messerfenster 12 des Grundkörpers 3 in eine neutrale Position.

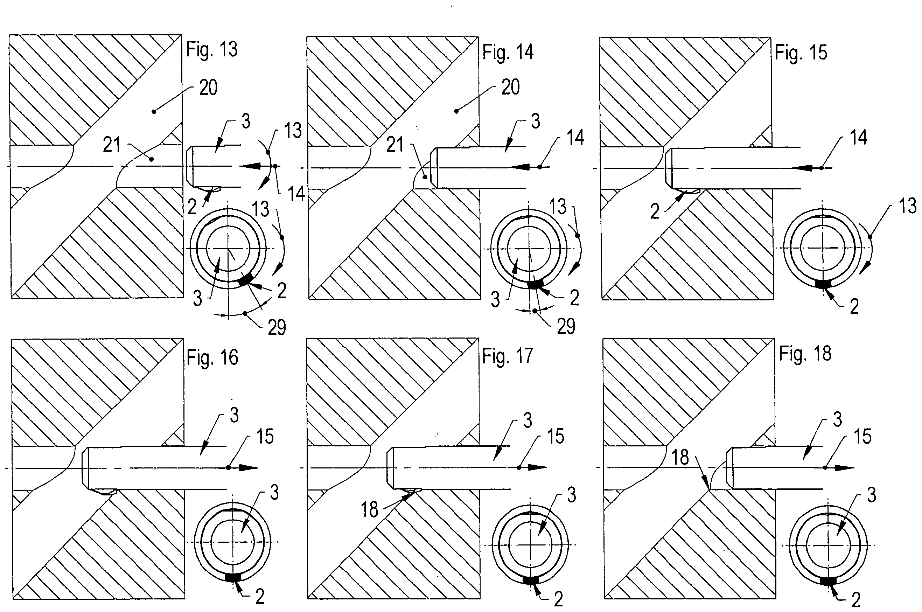

Die Figuren 13 bis 18 zeigen die schrittweise Bearbeitung des Bohrungsrandes der Querbohrung 21 in Form von schrittweise aufeinanderfolgenden Indexierbewegungen, die schrittweise in Pfeilrichtung 13 stattfinden. Wie in Figur 13 dargestellt, wird beim Übergang von Figur 13 auf Figur 14 zunächst das Messer 2 von seiner eingezeichneten Position um einen Indexierwinkel 29 in eine neue Stellung gedreht, und in dieser neuen Stellung wird das Messer 2 in die Position nach Figur 14 in die Querbohrung 21 eingefahren. Die Figur 14 ist lediglich eine Zwischenstufe zwischen der Figur 13 und Figur 15, wo erkennbar ist, dass nach dem Durchfahren durch die Bohrung nach Figur 14 der Grundkörper 3 nochmals um einen weiteren Indexierwinkel gedreht wird und in dieser Drehstellung des Messers von Figur 13 zur Figur 15 die eigentliche Entgrataktion stattfindet, wie dies in Figur 16 dargestellt ist.

Die Figuren 16 bis 18 zeigen somit die schrittweise ablaufende Entgrataktion, wobei ein einziger Span in Form eines Materialschnittes 28 vom Bohrungsrand abgehoben wird, wobei eine Spanlänge von z. B. 3/10 mm entsteht. Hierbei wird davon ausgegangen, dass der Durchmesser des Grundkörpers des Entgratwerkzeuges 4,8 mm beträgt und die Schneidkante 6 des Messers 2 eine Breite von 1,2 mm aufweist.

Nachdem sich überlagernde Entgratschnitte stattfinden, und die Indexierwinkel 29 sich überlagern und nicht bündig nebeneinanderliegen, ist auch die Spanbreite entsprechend verringert, das heißt, es entsteht eine Spanbreite von z. B. 0,3 mm gegeben. Die hier angegebenen Größenverhältnisse sollen lediglich die Art und Ausführung eines bevorzugten Ausführungsbeispiels erläutern. Die angegebenen Größenverhältnisse beschränken deshalb nicht den Schutzumfang der Erfindung.

Die bogenförmige Form der Schneidkante 6 des Messers hat sich als besonders vorteilhaft herausgestellt. Versuche haben gezeigt, dass nicht der gesamte Bogen der Schneidkante 6 auf einmal schneidet. Während der schrittweise am Rand der Ausnehmung fortschreitenden Entgratung schneidet - wegen der unrunden Form der Ausnehmung - nur ein bestimmter Abschnitt auf der Bogenform der Schneidkante, nicht jedoch die gesamte Bogenform.

Anstatt einer bogenförmig ausgebildeten Schneidkante 6 können auch andere Schneidkantenformen verwendet werden, wie z. B. ovale Schneidkantenprofile, oder elliptische oder mehreckige Formen.

Die Erfindung ist deshalb nicht auf eine bogenförmige Schneidkante beschränkt.

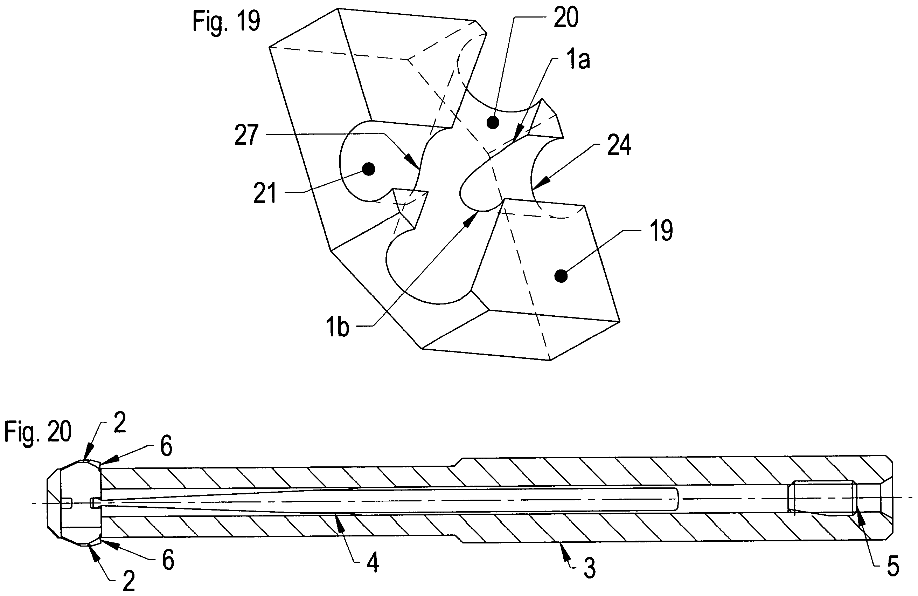

Die Figur 19 zeigt eine teilweise geschnittene Darstellung der sich schneidenden Längs- und Querbohrung 20, 21 in einer ähnlichen Art, wie es in Figur 1 dargestellt ist. Aus dieser Darstellung ist die bessere Verschneidung der Bohrungen 20, 21 und die sich daraus bildende unrunde Ausnehmung mit den Bohrungskanten 1, 1a, 1b zu entnehmen.

Die Figur 20 zeigt eine gegenüber Figur 3 abgewandelte Ausführungsform, aus der erkennbar ist, dass bei einer gleichen Konfiguration und einem gleichen Aussehen des Entgratwerkzeuges statt eines einseitig wirkenden Messers 2 ein doppelseitig wirkendes Messer verwendet wird, welches demzufolge zwei einander gegenüberliegende Schneidkanten 6 aufweist.

Hierbei müssen die beiden Messerhälften der beiden entgegengesetzt gestellten Messer 2,2 nicht unbedingt spiegelsymmetrisch ausgebildet sein. Ebenso ist es nicht lösungsnotwendig - wird aber bevorzugt - wenn die Schneidkanten 6 gleich ausgebildet sind.

Mit einem solchen doppelt wirkenden Messer ergibt sich der Vorteil, dass jeweils eine der beiden Schneidkanten 6 in Eingriff mit dem Bohrungsrand 1 gebracht werden kann, während die andere Schneidkante 6 inaktiv ist.

Fährt das Entgratwerkzeug jedoch weiter zurück, kann auf diesem Weg eine anders geformte Bohrungskante von der gegenüberliegenden Schneidkante entgratet werden.

Das so in Figur 20 dargestellte doppelt wirkende Messer 2,2 kann also unterschiedliche Entgrataktionen in gleichem Rückhub ausführen.

Selbstverständlich ist ein doppelt wirkendes Messer nicht auf den Rückhub in Pfeilrichtung 15 (siehe Figur 5) beschränkt, sondern ein solches Messer kann auch um 180 Grad gewendet werden und wirkt dann doppelwirkend im Stoßbetrieb, wobei beide Schneidkanten 6,6 nach vorne in Gegenrichtung zur in Figur 5 eingezeichneten Pfeilrichtung 15 gerichtet sind.

Das in Figur 20 doppelt wirkend gezeigte Messer 2,2 kann mit sämtlichen Ausführungsformen und Modifikationen sämtlicher vorgenannter Ausführungen und auch der später genannten Ausführungen kombiniert und angewendet werden.

Die Figur 21 zeigt ein weiteres Messer 2b, welches in der gleichen Weise wie das in Figur 7 dargestellte Messer ausgebildet ist. Für die gleichen Teile gelten deshalb auch die gleichen Bezugszeichen. Unterschiedlich bei diesem Messer ist jedoch, dass die an die Schneidkante 6 anschließende Steuerfläche 7 gemäß Figur entfällt und die Schneidkante 6 deshalb direkt in die neutrale, nicht schneidende Gleitfläche 9 übergeht.

Um eine Verdrängung des Messers 2b in den Innenraum des Messerfensters 12 bei der Entgrataktion zu erreichen - dies ist anhand der Figuren 9 bis 12 dargestellt worden - wird zur Ausübung der Verdrängungskraft in Pfeilrichtung 17 (siehe Figur 11) nur die Schräge 35 der Spanfläche 8 verwendet.

Diese Schräge legt sich in gleicher Weise wie es bei Ziffer 28 in Figur 10 erläutert wurde, an das Material an und gleitet an diesem hinauf, um so das gesamte Messer in Pfeilrichtung 17 während des Materialschnittes in das Messerfenster 12 hineinzuverdrängen, wie dies anhand der Figur 11 erläutert wurde.

Aus der Darstellung der Figur 21 (diese Ausführungsform fällt nicht unter den Wortlaut der Ansprüche, wird aber als das Verständnis der Erfindung erleichternd angesehen) im Vergleich mit der Figur 6 ergibt sich somit, dass es nicht unbedingt lösungsnotwendig ist, dass sich an die Schneidkante 6 eine die Messerverdrängung in Pfeilrichtung 17 steuernde Steuerfläche 7 anschließt. Stattdessen kann auch die Schräge 35 der Spanfläche 8 genutzt werden, um eine gleiche Verdrängungsaktion in Pfeilrichtung 17 während des Entgratungsschnittes nach Figur 10 und 11 zu erreichen.

Die Figur 22 zeigt eine vollkommen andere Ausführungsform eines Messers, wobei sämtliche Merkmale dieser Ausführungsform auch auf die vorher genannten Merkmale und Modifikationen in sämtlichen Zeichnungen und Beschreibungen verwendet werden können.

Kennzeichnend für diese Ausführungsform ist ein Entgratwerkzeug, bei dem der zylindrische Grundkörper 3 vollkommen entfällt und die im Innenraum des Grundkörpers 3 nach Figur 3 vorhandene Feder 4 frei liegt und in den Pfeilrichtungen 31, 32 federnd ausgebildet ist.

Diese Feder 4 wirkt also wie die in Figur 3 beschriebene Feder 4 als einseitig eingespannte Biegefeder, wobei der Grundkörper 3 nunmehr der hintere Halter der Feder 4 ist und dieser als frei schwingende Biegefeder ausgebildet ist.

Am vorderen freien und schwenkbaren Ende der so als Biegefeder ausgebildeten Feder 4 ist das mindestens eine Messer 2 angeordnet.

Anstatt des hier gezeigten Messers 2 können auch die Messerformen bezüglich des Messers 2a, 2b und 2' verwendet werden.

Die Figur 22 zeigt außerdem, dass es möglich ist, mehr als ein Messer auf unterschiedlichen Abständen 36 an der Feder 4 anzuordnen.

Das dort gezeigte Messer 2' ist identisch wie das vorgenannte Messer 2 ausgebildet, befindet sich jedoch auf einer anderen Länge 33 - nämlich auf der Länge 34 - auf der Feder 4 und ist mit dieser verbunden. Die beiden Positionen 33, 34 sind also durch den Abstand 36 voneinander getrennt, und somit ist es möglich, zwei unterschiedliche Messer 2,2' in Eingriff mit zwei hintereinander liegenden Bohrungen zu bringen.

Wie bereits schon ausgeführt, können die beiden Messer 2,2' auch durch die vorher beschriebenen anderen Messerformen bezüglich der Messer 2a, 2b ersetzt sein.

Eine solche Ausführung mit zwei hintereinander liegenden Messern 2,2' kann auch bei der Ausführung nach Figur 3 verhindert werden. Hierbei wird dann vorausgesetzt, dass sich hinter dem vorderen Messerfenster 12 im Abstand 36 noch ein weiteres Messerfenster im Grundkörper 3 befindet und im Bereich dieses Messerfensters ein Messer 2' angeordnet ist, welches mit der Biegefeder 4 im Bereich der Länge 34 befestigt ist.

Anstatt einer frei schwingenden Biegefeder 4 nach Figur 22 kann also die Ausführung mit mindestens zwei axial hintereinander liegenden Messern 2,2' auch auf ein Entgratwerkzeug nach Figur 3 übertragen werden.

Wichtig ist, dass das Werkzeug in einer vorteilhaften Ausführungsform nicht drehend arbeitet, sondern mit seiner stirnseitigen Schneide ziehend und stossend entgratet. Das Werkzeug ist hierbei seitlich rund und schwenkt bei jedem Hub in die voreingestellte Ausgangsposition.

Der Entgratvorgang könnte nun wie folgt aussehen. Das Werkzeug taucht in das Werkstück ein und wird federbelastet in den Grundkörper eingeklappt. Nachdem die Werkstückbohrung durchfahren ist, klappt das Messer wieder in die voreingestellte Ausgangsposition aus und ist für den Entgratvorgang bereit. Bei jedem Stoß- bzw. Ziehvorgang wird die Werkstückkante entgratet. Durch die ständige Zieh- und Stossbewegung des Werkzeuges kann so jeder beliebige Winkel entgratet werden. Entscheidend ist, dass hierbei keine drehende Entgratung stattfindet, sondern eine Entgratung in der Längsachse. Mit dem gesamten Werkzeug können so beliebige Konturen nachgefahren werden, welche durch die Zieh- und Stossbewegung vorteilhaft entgratet werden.

Folgende Verfahrensschritte ergeben sich als besonders vorteilhaft:
1. Das federbelastete, ausgefahrene Messer trifft auf die Ausnehmungskante und beginnt mit der spanabhebenden Entgratung
2. Die anschliessende Steuerfläche führt das Messer zum Einfahren, bestimmt die Form der Entgratung und begrenzt die Entgratbewegung in Längsrichtung.
3. Nach erfolgter Entgratung fährt das Messer entlang der neutralen Gleitfläche durch die Ausnehmung.

### Zeichnungslegende

1 Bohrungsrand
1a Bohrungskante obere
1b Bohrungskante untere
2 Messer
2a Messer
2b Messer
2' Messer
3 Grundkörper
4 Feder
5 Spannschraube
6 Schneidkante
6a Schneidkante
7 Steuerfläche
8 Spanfläche
8a Spanfläche
9 Gleitfläche
10 Einführfläche
11 Messernut
11' Messernut
12 Messerfenster
13 Pfeilrichtung (Indexbewegung)
14 Pfeilrichtung
15 Pfeilrichtung
15a Pfeilrichtung
16 Kontaktpunkt
17 Pfeilrichtung
18 Entgratung
19 Werkstück
20 Längsbohrung
21 Querbohrung
22 Pfeilrichtung
23 Bohrungsaustritt
24 Bohrungseintritt
25 Spannut
26 Bohrungsaustrittskante
27 Bohrungseintrittskante (Durchgangsbohrung)
28 Materialschnitt
29 Indexierwinkel
30 neutrale Fläche
31 Pfeilrichtung
32 Pfeilrichtung
33 Länge
34 Länge
35 Schräge
36 Abstand

## Patentansprüche

1. Entgratwerkzeug zur Entgratung von beliebig geformten Rändern (1, 1a, 1b) von Ausnehmungen in Werkstücken (19) mit mindestens einem spanabhebenden quer zur Längsachse des Entgratwerkzeuges im Grundkörper radial verschiebbaren oder verschwenkbaren Messer (2, 2a, 2b, 2') mit mindestens einer Schneidkante (6,6a), welches eine spanabhebende Bearbeitung des Randes (1, 1a, 1b) der zu entgratenden Ausnehmung ausführt, wobei das Entgratwerkzeug als stoßend und/oder ziehend angetriebenes und in Richtung seiner Längsachse oszillierend verschiebbar angetriebenes Werkzeug ausgebildet ist, **dadurch gekennzeichnet, dass** im Grundkörper (3) des Entgratwerkzeug eine einseitig eingespannte Feder (4) angeordnet ist, deren vorderes, freies und federndes Ende in mindestens eine Messernut (11, 11') des Messers (2, 2a, 2b, 2') eingreift und dort verschwenkbar gelagert ist und dass sich an die Schneidekante (6, 6a) eine Steuerfläche (7, 7a) zur Steuerung der Verschiebung des Messers (2, 2a, 2b, 2') anschließt, wobei die Steuerfläche (7, 7a) schräg geneigt zur Längsachse des Entgratwerkzeuges ist und dadurch eine Verdrängung des federbelasteten Messers (2) in den Grundkörper (3) erfolgt.

2. Entgratwerkzeug nach Anspruch 1, **dadurch gekennzeichnet, dass** das eine Ende der Feder (4) mit einer Spannschraube (5) im Innenraum des Grundkörpers (3) befestigt ist.

3. Entgratwerkzeug nach einem der Ansprüche 1 oder 2, **dadurch gekennzeichnet, dass** die Feder (4) als einseitig eingespannte Biegefeder ausgebildet ist.

4. Entgratwerkzeug nach einem der Ansprüche 1 bis 3, **dadurch gekennzeichnet, dass** das Messer (2) in der Arbeitsstellung federbelastet unter der Wirkung der Feder (4) aus einem Messerfenster (12) herausragt.

5. Entgratwerkzeug nach einem der Ansprüche 1 bis 4, **dadurch gekennzeichnet, dass** unter der Last des vorderen Endes der Feder (4) eine radiale Verschiebebewegung nach außen oder entgegen der Kraft der Feder (4) nach innen in das Messerfenster (12) erfolgt.

6. Entgratwerkzeug nach einem der Ansprüche 1 bis 5, **dadurch gekennzeichnet, dass** das Messer (2, 2a, 2b, 2') als ein beidseitig schneidendes Messer (2, 2a, 2b, 2') ausgebildet ist, bei dem spiegelsymmetrisch aneinander gegenüberliegende Schneidkanten (6, 6a) angeordnet sind und jede Schneidkante (6, 6a) über eine zugeordnete Steuerfläche (7, 7a) in eine mittige gemeinsame Gleitfläche (9) übergeht.

7. Entgratwerkzeug nach einem der Ansprüche 1 bis 6, **dadurch gekennzeichnet, dass** sich anschließend an eine stirnseitige, etwa mittige, neutrale Gleitfläche (9) die hierzu abgewinkelte Steuerfläche (7, 7a) anschließt, die ihrerseits in die Schneidkante (6, 6) übergeht, an der sich im Winkel eine Spanfläche (8, 8a) anschließt.

8. Entgratwerkzeug nach einem der Ansprüche 1 bis 7, **dadurch gekennzeichnet, dass** die Schneidkante (6, 6a) etwa bogenförmig ausgebildet ist.

9. Entgratwerkzeug nach einem der Ansprüche 1 bis 8, **dadurch gekennzeichnet, dass** sich an die eine Seite der Gleitfläche (9) eine hierzu abgewinkelte Einfahrfläche (10) anschließt.

10. Entgratwerkzeug nach einem der Ansprüche 1 bis 9, **dadurch gekennzeichnet, dass** die Schneidkante (6, 6a) segmentiert ausgebildet ist.

11. Verfahren zur Entgratung von beliebig geformten Rändern (1, 1a, 1b) von Ausnehmungen in Werkstücken (19) mit einem Entgratwerkzeug mit mindestens einem spanabhebenden quer zur Längsachse des Entgratwerkzeuges in einem Grundkörper (3) radial verschiebbaren oder verschwenkbaren Messer (2, 2a), wobei das Entgratwerkzeug als Stoß- oder Ziehwerkzeug ausgebildet ist, welches in Richtung seiner Längsachse oszillierend verschiebbar, nämlich stoßend und/oder ziehend angetrieben ist und das Messer (2, 2a, 2b, 2') im Stoß- und/oder Ziehbetrieb eine Entgratung der Ränder (1, 1a, 1b) durchführt, **gekennzeichnet durch** folgende Verfahrensschritte:
11.1 Im ersten Verfahrensschritt taucht das Entgratwerkzeug mit dem aus dem Grundkörper (3) federnd vorgespannten, ausgefahrenen Messer (2, 2a, 2b, 2') in die Bohrung oder Ausnehmung ein, deren Rand (1, 1a, 1b) entgratet werden soll;
11.2 Das Entgratwerkzeug stößt auf die vorschubseitige Bohrungsinnenfläche, an der das Messer (2, 2a, 2b, 2') in den Grundkörper (3) federbelastet hinein verdrängt wird und in dieser neutralen Stellung zusammen mit dem Grundkörper (3) durch die Bohrung hindurch fährt;
11.3 Beim Austritt aus der Bohrung oder der beliebig geformten Ausnehmung fährt oder schwenkt das Messer (2, 2a, 2b, 2') federbelastet nach außen über den Außenumfang des Grundkörpers (3) des Entgratwerkzeuges hinaus und gelangt über den Rand der unrunden, zu entgratenden Ausnehmung hinaus;
11.4 Das Entgratwerkzeug wird danach in Ziehrichtung rückwärts im Vergleich zu der vorherigen Vorschubbewegung nach hinten bewegt;
11.5 Mit der weiter fortschreitenden Rückzugsbewegung wird das Messer - unter der Einwirkung einer Steuerfläche (7, 7a) am Messer- gegen die Last einer Feder oder eines Kraftspeichers in den Innenraum des Grundkörpers verdrängt und führt beim Zurückweichen in den Grundkörper des Entgratwerkzeuges die weitere spanabhebende Bewegung zur Entgratung des Ausnehmungsrandes durch;
11.6 Nach der vollständigen Abtrennung des Spans vom Rand der Ausnehmung fährt das Messer entgegen der Last der Feder oder des Kraftspeichers in den Grundkörper in eine neutrale, nicht-schneidende Position ein, und der gesamte Grundkörper wird damit in Ziehrichtung in die Bohrung eingefahren;
11.7 Als nächstes erfolgt eine um einen Indexierwinkel erfolgende Drehung des Entgratwerkzeuges um seine Längsachse und die Wiederholung der Schritte ab Ziffer 11.2.

## Claims

1. Deburring tool for deburring edges (1, 1a, 1b) of recesses of any shape in workpieces (19) having at least one metal-cutting blade (2, 2a, 2b, 2') which can be radially displaced or pivoted transversely to the longitudinal axis of the deburring tool in the base body and having at least one cutting edge (6, 6a), which executes metal-cutting machining of the edge (1, 1a, 1b) of the recess to be deburred, wherein the deburring tool is configured as a tool driven in slotting and/or drawing manner and driven to be displaceable in oscillating manner in the direction of its longitudinal axis, **characterised in that** in the base body (3) of the deburring tool is arranged a spring (4) clamped on one side, the front, free and resilient end of which engages in at least one blade groove (11, 11') of the blade (2, 2a, 2b, 2') and is mounted to be pivotable there and **in that** a control surface (7, 7a) to control displacement of the blade (2, 2a, 2b, 2') adjoins the cutting edge (6, 6a), wherein the control surface (7, 7a) is obliquely inclined to the longitudinal axis of the deburring tool and thus driving-out of the spring-loaded blade (2) into the base body (3) takes place.

2. Deburring tool according to claim 1, **characterised in that** the one end of the spring (4) is fixed in the interior of the base body (3) using a tightening screw (5).

3. Deburring tool according to one of claims 1 or 2, **characterised in that** the spring (4) is configured as a spiral spring clamped on one side.

4. Deburring tool according to one of claims 1 to 3, **characterised in that** the blade (2) in the working position projects from a blade window (12) spring-loaded under the action of the spring (4).

5. Deburring tool according to one of claims 1 to 4, **characterised in that** under the load of the front end of the spring (4), a radial displacement movement takes place outwards or counter to the force of the spring (4) inwards into the blade window (12).

6. Deburring tool according to one of claims 1 to 5, **characterised in that** the blade (2, 2a, 2b, 2') is configured as a blade (2, 2a, 2b, 2') cutting on both sides, in which cutting edges (6, 6a) opposite one another in mirror symmetry are arranged and each cutting edge (6, 6a) changes into a central common sliding surface (9) via an assigned control surface (7, 7a).

7. Deburring tool according to one of claims 1 to 6, **characterised in that** adjoining an endface side, approximately central, neutral sliding surface (9) adjoins the control surface (7, 7a) at an angle thereto which in turn changes into the cutting edge (6, 6a) at which at an angle a machining surface (8, 8a) adjoins.

8. Deburring tool according to one of claims 1 to 7, **characterised in that** the cutting edge (6, 6a) is configured to be approximately arc-shaped.

9. Deburring tool according to one of claims 1 to 8, **characterised in that** at the one side of the siding surface (9) adjoins a run-in surface (10) at an angle thereto.

10. Deburring tool according to one of claims 1 to 9, **characterised in that** the cutting edge (6, 6a) is configured to be segmented.

11. Method for deburring edges (1, 1a, 1b) of recesses of any shape in workpieces (19) using a deburring tool having at least one metal-cutting blade (2, 2a) which can be radially displaced or pivoted transversely to the longitudinal axis of the deburring tool in a base body (3), wherein the deburring tool is configured as a slotting or drawing tool which can be displaced in oscillating manner in the direction of its longitudinal axis, namely is driven in slotting and/or drawing manner, and the blade (2, 2a, 2b, 2') in slotting and/or drawing operation carries out deburring of the edges (1, 1a, 1b), **characterised by** the following method steps:
11.1 In the first method step, the deburring tool with the blade (2, 2a, 2b, 2') moved out from the base body (3) and pretensioned in resilient manner plunges into the bore or recess, the edge (1, 1a, 1b) of which is to be deburred;
11.2 The deburring tool slots onto the feed-side inner bore surface, at which the blade (2, 2a, 2b, 2') is driven out into the base body (3) in spring-loaded manner and in this neutral position together with the base body (3) moves through the bore;
11.3 When exiting the bore or the recess of any shape, the blade (2, 2a, 2b, 2') moves or pivots in spring-loaded manner outwards beyond the outer circumference of the base body (3) of the deburring tool and goes beyond the edge of the non-round recess to be deburred;
11.4 The deburring tool is then moved towards the rear backwards in drawing direction compared to the previous feed movement;
11.5 With the further continuing backward movement, the blade - under the action of a control surface (7, 7a) on the blade - is driven out against the load of a spring or of an energy store into the interior of the base body and when retreating into the base body of the deburring tool carries out the further metal-cutting movement to deburr the recess edge;
11.6 After complete separation of the shaving from the edge of the recess, the blade moves, counter to the load of the spring or of the energy store, into the base body into a neutral, non-cutting position, and the entire base body is thus moved into the bore in drawing direction;
11.7 Next, rotation of the deburring tool taking place about an indexing angle takes place about its longitudinal axis and repetition of the steps from number 11.2.

## Revendications

1. Outil d'ébarbage pour l'ébarbage de bords de n'importe quelle forme (1, 1a, 1b) de cavités dans des pièces usinées (19) comprenant au moins un couteau (2, 2a, 2b, 2') enlevant des copeaux, apte à coulisser ou à pivoter radialement dans le corps de base transversalement par rapport à l'axe longitudinal de l'outil d'ébarbage et comprenant au moins une arête de coupe (6, 6a) qui réalise un usinage par enlèvement de copeaux du bord (1, 1a, 1b) de la cavité à ébarber, dans lequel l'outil d'ébarbage est formé en un outil entraîné par percussion et/ou par traction et entraîné de manière coulissante de manière oscillatoire dans la direction de son axe longitudinal, **caractérisé en ce que** dans le corps de base (3) de l'outil d'ébarbage est disposé un ressort (4) serré unilatéralement, dont l'extrémité avant, libre et faisant ressort s'engage dans au moins une rainure de couteau (11, 11') du couteau (2, 2a, 2b, 2') et est montée de manière pivotante à cet endroit et qu'à l'arête de coupe (6, 6a) fait suite une surface de guidage (7, 7a) pour guider le coulissement du couteau (2, 2a, 2b, 2'), dans lequel la surface de guidage (7, 7a) est inclinée en biais par rapport à l'axe longitudinal de l'outil d'ébarbage et ainsi a lieu un déplacement du couteau chargé par ressort (2) dans le corps de base (3).

2. Outil d'ébarbage selon la revendication 1, **caractérisé en ce qu'**une extrémité du ressort (4) est fixée avec une vis de serrage (5) dans l'espace intérieur du corps de base (3).

3. Outil d'ébarbage selon l'une des revendications 1 ou 2, **caractérisé en ce que** le ressort (4) est conformé en un ressort de flexion serré unilatéralement.

4. Outil d'ébarbage selon l'une des revendications 1 à 3, **caractérisé en ce que** le couteau (2) chargé par ressort dans la position de travail dépasse d'une l'ouverture de couteau (12) sous l'action du ressort (4).

5. Outil d'ébarbage selon l'une des revendications 1 à 4, **caractérisé en ce que** sous la charge de l'extrémité avant du ressort (4) a lieu un déplacement de coulissement radial vers l'extérieur ou à l'encontre de la force du ressort (4) vers l'intérieur dans l'ouverture de couteau (12).

6. Outil d'ébarbage selon l'une des revendications 1 à 5, **caractérisé en ce que** le couteau (2, 2a, 2b, 2') est conformé en un couteau (2, 2a, 2b, 2') à coupe bilatérale sur lequel des arêtes de coupe opposées en miroir (6, 6a) sont disposées et chaque arête de coupe (6, 6a) se transforme par une surface de guidage associée (7, 7a) en une surface de glissement commune centrale (9).

7. Outil d'ébarbage selon l'une des revendications 1 à 6, **caractérisé en ce qu'**à une surface de glissement côté frontal (9) à peu près centrale, neutre, fait suite la surface de guidage (7, 7a), coudée par rapport à celle-ci, qui se transforme elle-même en arête de coupe(6, 6) à laquelle fait suite suivant un angle une surface d'attaque (8, 8a).

8. Outil d'ébarbage selon l'une des revendications 1 à 7, **caractérisé en ce que** l'arête de coupe (6, 6a) a une forme à peu près arquée.

9. Outil d'ébarbage selon l'une des revendications 1 à 8, **caractérisé en ce qu'**à un côté de la surface de glissement (9) fait suite une surface d'entrée (10) coudée par rapport à celle-ci.

10. Outil d'ébarbage selon l'une des revendications 1 à 9, **caractérisé en ce que** l'arête de coupe (6, 6a) a une forme segmentée.

11. Procédé pour ébarber des bords de n'importe quelle forme (1, 1a, 1b) de cavités dans des pièces usinées (19) comprenant un outil d'ébarbage comprenant au moins un couteau enlevant des copeaux (2, 2a), apte à coulisser ou à pivoter radialement dans un corps de base (3) transversalement par rapport à l'axe longitudinal de l'outil d'ébarbage, dans lequel l'outil d'ébarbage est formé en un outil à percussion ou à traction qui est entraîné coulissant de manière oscillatoire dans la direction de son axe longitudinal, à savoir par percussion et/ou par traction, et le couteau (2, 2a, 2b, 2') réalise en mode percussion et/ou traction un ébarbage des bords (1, 1a, 1b), **caractérisé par** les étapes de procédé suivantes :
11.1 Dans la première étape de procédé, l'outil d'ébarbage pénètre avec le couteau (2, 2a, 2b, 2') sortie, précontraint par ressort, du corps de base (3), dans le perçage ou la cavité dont le bord (1, 1a, 1b) doit être ébarbé ;
11.2 L'outil d'ébarbage percute la surface intérieure de perçage côté avance, contre laquelle le couteau (2, 2a, 2b, 2') est poussé, chargé par ressort, dans le corps de base (3) et, dans cette position neutre, traverse le perçage avec le corps de base (3) ;
11.3 Lors de sa sortie du perçage ou de la cavité de n'importe quelle forme, le couteau (2, 2a, 2b, 2') se déplace ou pivote, chargé par ressort, vers l'extérieur au-delà de la circonférence extérieure du corps de base (3) de l'outil d'ébarbage et arrive au-delà du bord de la cavité non circulaire à ébarber ;
11.4 L'outil d'ébarbage est ensuite déplacé dans une direction de traction vers l'arrière par rapport au mouvement d'avance précédent ;
11.5 Avec la poursuite du mouvement de retrait, le couteau - sous l'action d'une surface de guidage (7, 7a) sur le couteau - est repoussé à l'encontre de la charge d'un ressort ou d'un accumulateur d'énergie dans l'espace intérieur du corps de base et réalise, en se rétractant dans le corps de base de l'outil d'ébarbage, la poursuite du déplacement d'enlèvement de copeaux pour ébarber le bord de la cavité ;
11.6 Après la séparation complète du copeau du bord de la cavité, le couteau rentre à l'encontre de la charge du ressort ou de l'accumulateur d'énergie dans le corps de base dans une position neutre, non coupante, et tout le corps de base est ainsi rentré dans le perçage dans la direction de traction ;
11.7 Ensuite a lieu une rotation de l'outil d'ébarbage autour de son axe longitudinal, qui a lieu suivant un angle d'indexage, et la répétition des étapes à partir du chiffre 11.2.
